Europäisches Patentamt

European Patent Office

Office européen des brevets

(19)

(11) **EP 1 229 238 B1**

(12) **EUROPEAN PATENT SPECIFICATION**

(45) Date of publication and mention
of the grant of the patent:
**19.10.2005  Bulletin 2005/42**

(51) Int Cl.⁷: **F02M 35/10**, F02D 41/18,
F02D 41/22

(21) Application number: **02002369.3**

(22) Date of filing: **31.01.2002**

(54) **Device for detecting abnormality in an engine intake system**

Einrichtung zur Fehlerdiagnose eines Motoransaugsystems

Dispositif de détection d'anomalie dans un système d'admission pour moteur

(84) Designated Contracting States:
**DE ES FR GB IT**

(30) Priority: **01.02.2001  JP 2001025636
13.02.2001  JP 2001035391**

(43) Date of publication of application:
**07.08.2002  Bulletin 2002/32**

(73) Proprietors:
• **KABUSHIKI KAISHA TOYOTA JIDOSHOKKI
Kariya-shi, Aichi-ken (JP)**
• **Toyota Jidosha Kabushiki Kaisha
Toyota-shi, Aichi-ken (JP)**

(72) Inventors:
• **Umehara, Tsutomu
Kariya-shi, Aichi-ken (JP)**
• **Kinuhata, Hiroki
Toyota-shi, Aichi-ken (JP)**
• **Yamaguchi Masaaki
Aichi-ken (JP)**

(74) Representative: **TBK-Patent
Bavariaring 4-6
80336 München (DE)**

(56) References cited:
**EP-A- 1 081 361          DE-C- 19 705 766
US-A- 5 125 384          US-A- 5 190 012**

• **PATENT ABSTRACTS OF JAPAN vol. 2000, no.
16, 8 May 2001 (2001-05-08) -& JP 2001 020791 A
(TOYOTA MOTOR CORP), 23 January 2001
(2001-01-23)**

## Description

BACKGROUND OF THE INVENTION

1. Field of the Invention

This invention relates to a detecting device for detecting abnormality in a swirl control valve in the intake system of an engine.

2. Description of the Related Art

A swirl control valve is provided in the intake manifold of an engine. By completely closing the swirl control valve in the low load, low rpm range of the engine, the intake flow velocity in the combustion chamber is increased to form a swirl in the combustion chamber, thereby achieving an improvement in terms of combustion.

Suppose this swirl control valve is stuck in the completely closed state. In the high load, high rpm range, the swirl control valve must be set to be in the totally open state so as to supply a large amount of intake air to the combustion chamber. If, in this range, the swirl control valve cannot be opened, the intake resistance will increase, resulting in a shortage in intake air amount. When the intake air amount is not sufficient and combustion is effected in a fuel rich state, the exhaust gas temperature of the engine rises, so that the heat load of the piston, exhaust manifold, turbo charger, catalyst, etc. increases, resulting in the reliability of these components being impaired. Thus, in the intake system of an engine, it is necessary to detect any abnormality leading to a shortage in intake air amount, such as abnormal closing of the swirl control valve.

For example, as disclosed in Japanese Patent Application Laid-open No. Hei 11-218028, as a device for detecting a malfunction of the swirl control valve of an engine, a device is known in which it is determined that the swirl control valve is stuck in the closed state if, in the high load, high rpm range of the engine, the intake air amount is smaller than a reference value.

However, in the technique disclosed in Japanese Patent Application Laid-open No. Hei 11-218028, the reference value is calculated from the throttle valve opening and the engine speed, so that it is necessary to provide a table interpolation function for highlands correction, with the result that the data capacity for failure detection increases.

US 5,670,715 A discloses a device for detecting malfunction in an engine intake system having a swirl control valve, which gradually minimizes a deviation of rotational speed of the engine sampled within a predetermined period of time by adjusting the air-fuel ratio while the swirl control valve is closed to generate swirling. The air-fuel ratio obtained as a result of minimizing the deviation in rotational speed is compared with a reference air-fuel ratio, thereby diagnosing malfunction in the intake air control mechanism such as a mechanical or electrical defect of a change-over valve, a diaphragm or the swirl control valve.

SUMMARY OF THE INVENTION

It is an object of the present invention to provide an alternative device for detecting abnormality in a swirl control valve of an engine intake system.

According to the present invention, there is provided an engine intake system abnormality detecting device as defined in claim 1. Further developments are set forth in the dependent claims.

BRIEF DESCRIPTION OF THE DRAWINGS

Fig. 1 is a diagram illustrating a structure in a case in which an engine intake system abnormality detecting device according to Example 1 is applied to a vehicle in which a diesel engine is mounted;
Fig. 2 is a graph showing the relationship between the intake air pressure of an intake manifold and the intake air amount detected by an air flow meter in the engine intake system abnormality detecting device according to Example 1;
Fig. 3 is a flowchart illustrating the abnormality detecting operation of the engine intake system abnormality detecting device according to Example 1;
Fig. 4 is a flowchart illustrating the abnormality detecting operation of an engine intake system abnormality detecting device according to Example 2;
Fig. 5 is a flowchart illustrating the abnormality detecting operation of an engine intake system abnormality detecting device according to Example 3;
Fig. 6 is a diagram illustrating a structure in a case in which an engine intake system abnormality detecting device according to Example 5 is applied to a vehicle in which a diesel engine is mounted; and
Fig. 7 is a flowchart illustrating the abnormality detecting operation of the engine intake system abnormality detecting device according to Example 5.

DETAILED DESCRIPTION OF THE INVENTION

This invention will now be described with reference to the Examples. Examples 2 and 6 are embodiments of the invention.

Example 1

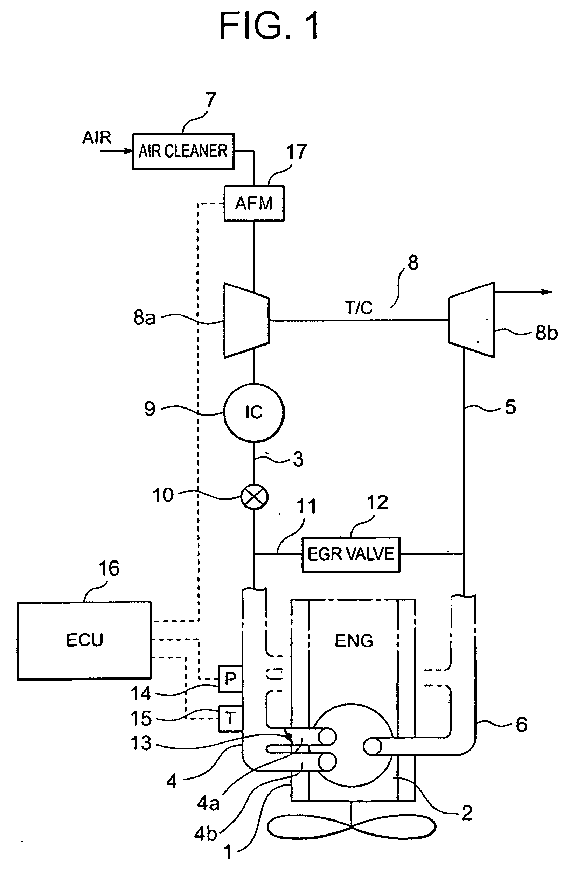

Fig. 1 shows the system configuration when an engine intake system abnormality detecting device according to Example 1 is applied to a vehicle in which a diesel engine is mounted.

As shown in the drawing, connected to a cylinder head 2 of a diesel engine main body 1 are an intake manifold 4 constituting a part of an intake passage 3 and an exhaust manifold 6 constituting a part of an exhaust passage 5. One end of the intake passage 3 is connected to an air cleaner 7 for introducing air from the atmosphere, and there are provided in the intake passage 3 a compressor 8a of a turbo charger 8, an intercooler 9, and an intake throttle valve 10. Here, the intake passage 3, the air cleaner 7, the compressor 8a, the intercooler 9, and the intake throttle valve 10 constitute an engine intake system for supplying air to a combustion chamber in the cylinder head 2. In the exhaust passage 5, there is provided an exhaust turbine 8b of the turbo charger 8.

The exhaust passage 5 communicates with the intake passage 3 on the downstream side of the intake throttle valve 10 through an EGR introduction passage 11, in which there is provided an EGR valve 12. By operating the EGR valve 12, a part of the exhaust gas in the exhaust passage 5 is introduced to the intake passage 3 as EGR gas.

The intake manifold 4 is provided with a tangential port 4a and a helical port 4b, which are connected to the cylinder head 2. There is provided in the tangential port 4a a swirl control valve 13. When the swirl control valve 13 is open, air is supplied to the combustion chamber through both the tangential port 4a and the helical port 4b. When the swirl control valve 13 is totally closed, the tangential port 4a is closed, and air is supplied to the combustion chamber solely through the helical port 4b.

On the upstream side of the swirl control valve 13 of the intake manifold 4 and on the downstream side of the compressor 8a of the turbo charger 8, there are provided a pressure sensor 14 for detecting the pressure of the intake air in the intake manifold 4 and a temperature sensor 15 for detecting the temperature of the intake air, the two sensors being respectively connected to an ECU 16. The pressure sensor 14 constitutes a detecting unit for detecting a value related to an intake air amount of the intake system of the engine.

Further, in the intake passage 3 on the downstream side of the air cleaner 7, there is provided an air flow meter 17 for detecting the intake air amount of the engine intake system, and is connected to the ECU 16.

The air flow meter 17 serves to detect the amount of intake air supplied to the combustion chamber through the intake passage 3. For example, it is of the Karman vortex type or the movable vane type. The air flow meter 17 is composed of a flow rate sensor and a temperature sensor, and the ECU 16 calculates an actual intake air pressure GF on the basis of a flow rate signal and a temperature signal.

The ECU 16 is connected to the pressure sensor 14, the temperature sensor 15, and the air flow meter 17, and constitutes an abnormality judgment circuit for making a judgment as to whether there is any abnormality in the intake system on the basis of signals from these components.

In the engine intake system, atmospheric air is introduced into the intake passage 3 through the air cleaner 7, and pressure-charged and compressed by the turbo charger 8. The intake air which has attained high temperature as a result of pressure-charging by the turbo charger 8 is cooled by the inter-cooler 9, and then passes through the intake throttle valve 10 before it is introduced into the combustion chamber through the tangential port 4a and the helical port 4b of the intake manifold 4.

Assuming that the intake air amount taken in the intake air passage 3 is g, the intake air pressure is p and the intake air temperature is t, g and p/t are in a positive correlation; the higher the intake air pressure p, the larger the intake air amount g, and the lower the intake air temperature t, the larger the intake air amount g.

Further, if the intake air pressure p is the same, the lower the intake resistance, the larger the intake air amount g. For example, when the swirl control valve 13 in the intake air passage 3 is totally closed, the tangential port 4a is closed, and air is supplied to the combustion chamber only through the helical port 4b, so that the intake resistance at the intake manifold 4 increases, and the intake air amount g becomes small. On the other hand, when the swirl control valve 13 is opened, air is supplied to the combustion chamber through both the tangential port 4a and the helical port 4b, so that the intake resistance at the intake manifold 4 decreases, and the intake air amount g becomes large.

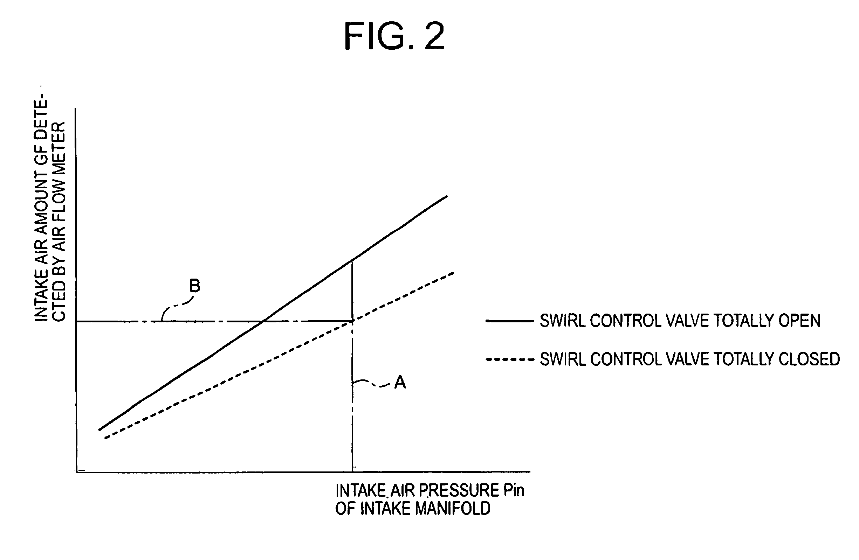

As shown in Fig. 2, the actual intake air amount GF, which is the actual intake air amount in the intake passage 3 detected by the air flow meter 17, and the intake air pressure Pim in the intake manifold 4 constituting a part of the intake passage 3 are in a positive correlation; when the intake air pressure Pim increases, the actual intake air amount GF also increases. Further, since there is a difference in intake resistance in the intake passage 3 between the case in which the swirl control valve 13 is totally closed and the case in which it is totally open, if the intake air pressure Pim is the same, there arises a difference in the intake air amount GF, as indicated by the dashed line A. Further, as indicated by the dashed line B, if the actual intake air amount GF is the same, there arises a difference in the intake air pressure Pim.

Thus, in this device for detecting abnormality in the intake system of this example, any abnormality in the engine intake system is detected by utilizing the following fact: when there is any abnormality in the intake passage 3 and the intake resistance increases, if the actual intake air amount GF in the intake passage 3 detected by the air flow meter 17 is the same, the intake air pressure Pim detected by the pressure sensor 14 increases.

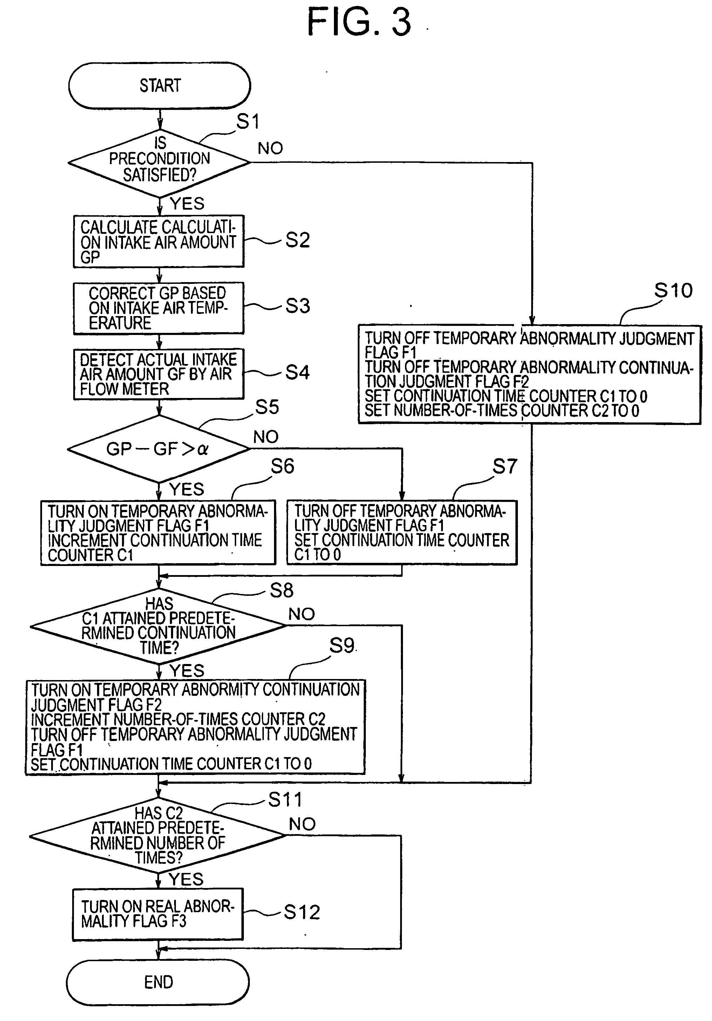

In the following, the operation of the engine intake system abnormality detecting device of this example will be described on the basis of the flowchart of Fig. 3.

The intake system abnormality detection routine shown in this flowchart is executed at a predetermined period of time by the ECU 16.

In step S1, a judgment is made as to whether the precondition for making intake system abnormality detection judgment is satisfied or not. That is, it is checked to see whether the pressure sensor 14, the temperature sensor 15, and the air flow meter 17 used for abnormality detection are out of order or not, making a judgment whether the requisite condition for the ECU 16 to make appropriate abnormality detection is satisfied.

When the precondition is satisfied, the intake air amount is calculated in step S2 on the basis of the intake air pressure Pim detected by the pressure sensor 14, the value thus obtained serving as the calculation intake air amount GP. Then, the procedure advances to step S3. When the precondition is not satisfied, the procedure advances to step S10.

In step S3, the calculation intake air amount GP is corrected on the basis of the intake air temperature Tim detected by the temperature sensor 15, the GP value being replaced with the GP value after correction. Thus, the calculation intake air amount GP is calculated as a function with respect to the intake air pressure Pim and the intake air temperature Tim.

Next, in step S4, the actual intake air amount GF is detected by the air flow meter 17.

Further, in step S5, a temporary abnormality judgment is performed, making a judgment as to whether the value obtained by subtracting the actual intake air amount GF from the calculation intake air amount GP, that is, GP - GF, is larger than a predetermined value $\alpha$. When GP - GF is larger than $\alpha$, it is determined in step S6 that there is a possibility of abnormality in the intake system, and a temporary abnormality judgment flag F1 is turned on. Further, a continuation time counter C1 which is initially set to zero and which counts the time during which the temporary abnormality judgment flag F1 is continuously on is incremented, and the procedure advances to step S7, where the temporary abnormality judgment flag F1 is turned off, and the continuation time counter C1 is cleared to zero. Then, the procedure advances to step S8.

Next, in step S8, a judgment is made as to whether the continuation time counter C1 has attained a predetermined continuation time value or not. When the continuation time counter C1 has attained a predetermined continuation time, it is determined in step S9 that the possibility of abnormality has been increased, and a temporary abnormality continuation judgment flag F2 is turned on anew. Further, a number-of-times counter C2 which is initially set to zero is incremented. The number-of-times counter C2 counts the number of times that the continuation time counter C1 has attained a predetermined continuation time. When, as a result of the temporary abnormality judgment flag F1 having been on for the predetermined continuation time, the temporary abnormality continuation judgment flag F2 is turned on, the temporary abnormality judgment flag F1 is turned off to perform the temporary abnormality judgment in step S5 from the first. At the same time, the continuation time counter C1 is cleared to zero.

On the other hand, when the continuation time counter C1 has not attained a predetermined continuation time, step S9 is skipped, and the procedure advances to step S11. Further, in step S1, if the precondition is not satisfied, the procedure advances to step S11 by way of step S10. In step S10, the temporary abnormality judgment flag F1 and the temporary abnormality continuation judgment flag F2 are turned off and, at the same time, the continuation time counter C1 and the number-of-times counter C2 are cleared to zero. That is, these flags and counters are initialized, and then the procedure advances to step S11.

Next, in step S11, a judgment is made as to whether the number-of-times counter C2 has attained a predetermined number of times or not. When the number-of-times counter C2 has attained a predetermined number of times, it is determined in step S12 that there is definitely abnormality in the intake system, and a real abnormality flag F3 is turned on, completing a series of abnormality detection processes. When the number-of-times counter C2 has not attained a predetermined number of times, step S12 is skipped to complete a series of abnormality detection processes.

When the real abnormality flag F3 is turned on, a routine different from the one described above is executed, whereby fail-safe processing with respect to abnormality in the engine intake system is performed. As fail-safe processing, the swirl valve control and the EGR control are suspended. Further, in order that the engine may not be operated in a high rpm high load range, acceleration restriction is effected, performing pseudo control so as to restrict the fuel injection amount with respect data on accelerator opening sensor, or directly restricting the amount of fuel injected into the combustion chamber.

When the real abnormality flag F3 has been turned on, the real abnormality flag F3 is not turned off solely by turning off the vehicle ignition switch. Only when the line electrically connecting the ECU 16 and the vehicle battery with each other is intercepted, the real abnormality flag F3 is turned off.

In this way, when there is some abnormality in the intake system and the intake resistance changes, the value obtained by subtracting the actual intake air amount GF detected by the air flow meter 17 from the calculation intake air amount GP calculated from the intake air pressure Pim detected by the pressure sensor 14 and the intake air temperature Tim detected by the temperature sensor 15, that is, the value of GP - GF changes, so that, by comparing this value with the predetermined value $\alpha$, it is possible to detect abnormality in the intake system with high accuracy.

Further, there is no need to provide a table interpolation function for highlands correction, and also on highlands, it is possible to detect abnormality in the engine intake system by using the same intake system abnormality detecting device without performing any particular processing regarding atmospheric pressure correction. Further, the data capacity for the detection of abnormality in the intake system may be small.

Further, since it is not a system in which the intake air amount detected by the air flow meter 17 is compared with a reference value, it is possible to perform abnormality judgment with high accuracy even in the low and medium speed ranges of the engine, in which the intake air amount is markedly increased according to the engine speed.

When the temporary abnormality judgment condition fails before the temporary abnormality judgment condition in step S5 has been continuously satisfied for a predetermined period of time, the temporary abnormality judgment flag F1 is turned off, and it is determined that there is no abnormality in the intake system, so that there is no danger of erroneous judgment in abnormality detection. In particular, in a transition state in which the engine speed changes greatly or the load fluctuates greatly as in the case of engine acceleration and the like, it is possible to eliminate erroneous judgment in abnormality detection.

Example 2

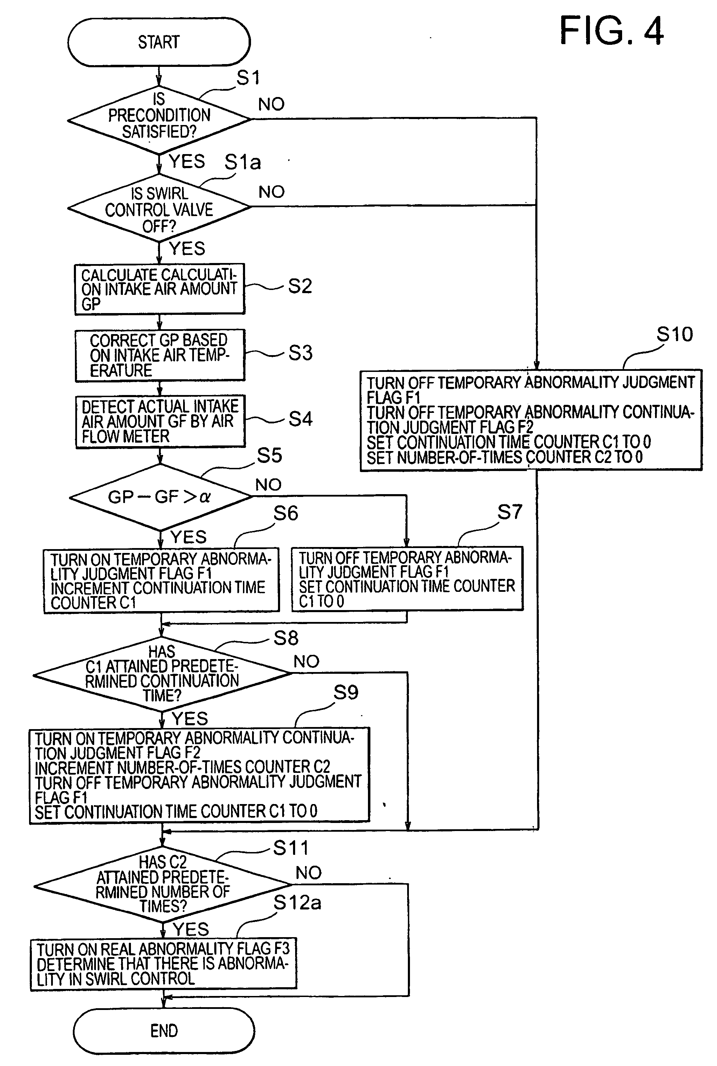

The engine intake system abnormality detecting device of Example 2 differs from the intake system abnormality detecting device of Example 1 in that the swirl control valve 13 is connected to the ECU 16. Fig. 4 is a flowchart illustrating the operation of an intake system abnormality detecting device according to this example.

This flowchart differs from the flowchart of Fig. 3 illustrating Example 1 in that step S1a is provided after step S1 and that step S12a is provided instead of step S12.

In step S1, a judgment is made as to whether the precondition for the detection of abnormality in the intake system is satisfied or not. When the precondition is satisfied, a judgment is made in step S1a as to whether the swirl control valve 13 is off or not as a further precondition for performing abnormality detection judgment. When the swirl control valve 13 is off, the procedure advances to step S2. When the swirl control valve 13 is not off, the procedure advances to step S10, the same processing as that in Example 1 being performed in each case.

Thereafter, when in step S11 the number-of-times counter C2 has attained a predetermined number of times, it is determined in step S12a that there is definitely abnormality in the intake system and the real abnormality flag F3 is turned on. At the same time, it is determined that the abnormality in the intake system is attributable to abnormality in the swirl control valve 13.

When the swirl control valve 13 is off, the swirl control valve 13 is opened, and air is supplied to the combustion chamber through both the tangential port 4a and the helical port 4b, so that there ought to be no increase in the intake resistance in the intake passage 3. If, in spite of that, it is determined in step S5 that the value of GP - GF is larger than the predetermined value α, and the procedure advances to step S12a after a series of processes, the abnormality in the intake system can be regarded as attributable to closure of the swirl control valve 13.

Example 3

In Example 1, the intake air temperature Tim is detected by using the temperature sensor 15. If, however, the intake air temperature Tim is predictable in an engine operating condition, the intake air temperature Tim may be set to a fixed value in the ECU 16, and the temperature sensor 15 can be omitted.

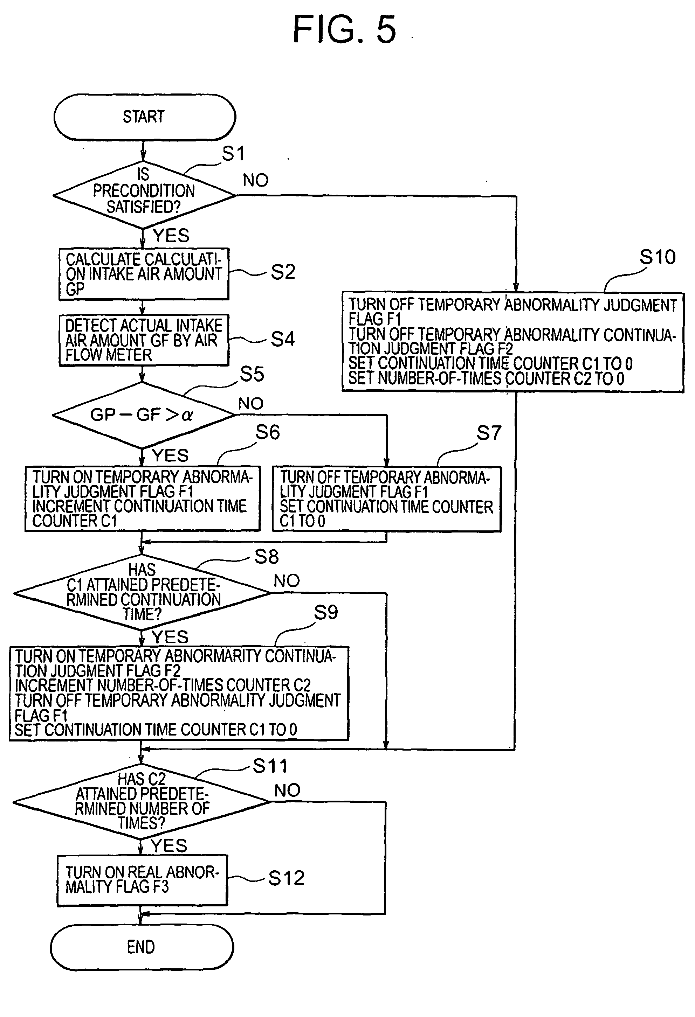

The operation of the engine intake system abnormality detecting device of this example will be illustrated with reference to the flowchart shown in Fig. 5. In this case, the calculation intake air amount GP is calculated exclusively as a function of the intake air pressure Pim, so that there is nothing which corresponds to step S3 in the flowchart of Fig. 3 illustrating Example 1, and the procedure advances from step S2 to step S4.

Example 4

In Example 1, the calculation intake air amount GP is calculated on the basis of the intake air pressure Pim and the intake air temperature Tim in steps S2 and S3 of the flowchart of Fig. 3. However, it is also possible to for the calculation formula for obtaining the calculation intake air amount GP to include a coefficient using the engine speed as a parameter, whereby it is possible to calculate the calculation intake air amount GP with high accuracy, making it possible to detect abnormality more accurately.

The engine intake system abnormality detecting devices of Examples 1 through 4 described above are widely applicable to the detection of abnormality in an intake system, making it also possible to detect clogging of an inter-cooler and of an air cleaner. They are also applicable to the detection of abnormality in the intake system of a gasoline engine. For example, they are capable of detecting sticking of a throttle valve. Further, since the value of the actual intake air amount GF changes when the air flow meter 17 deteriorates with time, it is possible to detect abnormality in the air flow meter 17 through comparison for a long period of time of changes in the value obtained by subtracting the actual intake air amount GF from the calculation intake air amount GP, i.e., GP - GF. Further, instead of the air flow meter composed of a flow rate sensor and a temperature sensor, it is also possible to use an air flow meter consisting of a flow rate sensor only.

As described above, the abnormality judgment circuit compares the calculation intake air amount calculated on the basis of the intake air pressure detected by the pressure sensor with the actual intake air amount which is the intake air amount detected by the air flow meter to thereby perform abnormality judgment for the intake system, whereby it is possible to detect abnormality in the engine intake system with high accuracy, and there is no need to perform highlands correction, making it possible to keep the data capacity for abnormality detection at low level.

Example 5

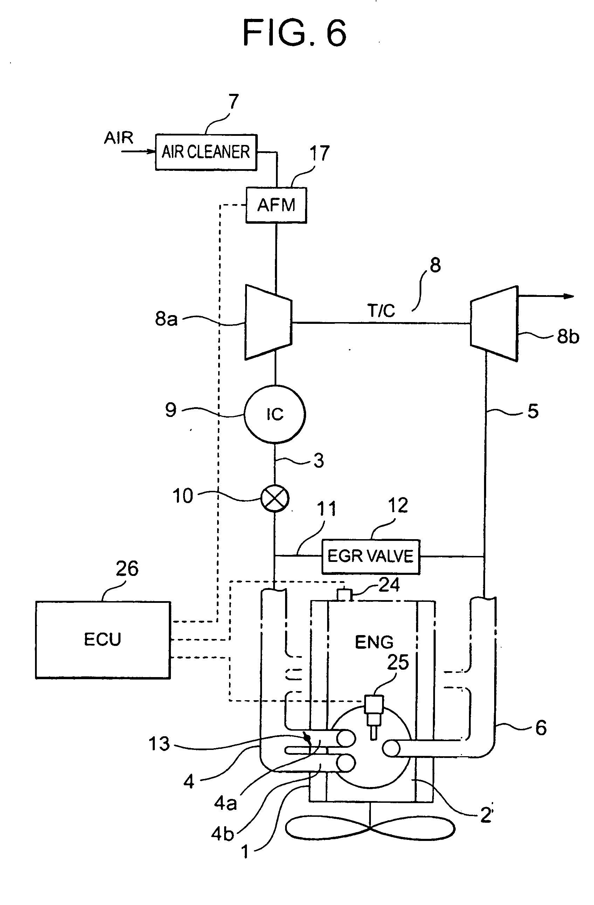

Fig. 6 shows the system configuration when an engine intake system abnormality detecting device according to Example 5 of this invention is applied to a vehicle in which a diesel engine is mounted.

In this engine intake system abnormality detecting device, there are provided an engine rotation sensor 24 and a fuel injection valve 25 instead of the pressure sensor 14 and the temperature sensor 15 of the intake system abnormality detecting device of Example 1, and an ECU 26 instead of the ECU 16. The components which are the same as or equivalent to those of Example 1 are indicated by the same reference numerals, and a detailed description of such components will be omitted.

The fuel injection valve 25 is arranged in the cylinder head 2, and is connected to the ECU 26. Further, the engine main body 1 is provided with the engine rotation sensor 24, which is connected to the ECU 26.

Further, as in Example 1, there is provided in the intake passage 3 on the downstream side of the air cleaner 7 the air flow meter 17 for detecting the intake air amount of the intake system of the diesel engine 1, which is connected to the ECU 26. The air flow meter 17 serves to detect the amount of intake air supplied to the combustion chamber through the intake passage 3. It is, for example, of the Karman vortex type or the movable vane type.

The ECU 26 constitutes the abnormality judgment circuit for performing abnormality judgment for the intake system and, at the same time, constitutes an injection amount calculating circuit for calculating the amount Q of the fuel injected into the combustion chamber through the fuel injection valve 25. The ECU 26 calculates the fuel injection amount Q on the basis of the accelerator opening, pressure, etc. obtained by an accelerator opening sensor (not shown), a pressure sensor (not shown) provided in the intake manifold 4, etc.

In the case of a diesel engine, when there is no abnormality in the intake system, the intake air amount g supplied to the intake passage 3 is larger than the requisite air amount for complete combustion of fuel in the fuel injection amount Q. Assuming that the ratio of the weight of the air to the weight of the fuel at the time of complete combustion is the theoretical air fuel ratio c, the requisite theoretical air amount g0 for complete combustion can be expressed as follows: $g0 = Q \times \rho \times c$, where Q is the fuel injection amount; $\rho$ is the density of the light oil used as the fuel; and c is the theoretical air fuel ratio (which is, for example, 14.6). The relationship between the intake air amount g and the theoretical air amount g0 is such that g is not less than g0. Assuming that the ratio of the intake air amount g to the theoretical air amount g0 is the excess air ratio $\lambda$, $\lambda$ is not less than 1.

When there is an abnormality in the intake system which will lead to an increase in intake resistance, for example, persistent closure of the swirl control valve 13, the intake air amount g is reduced. When it becomes less than the theoretical air amount g0, the value of the excess air ratio $\lambda$ is less than 1. Further, when the swirl control valve 13 is persistently closed, the pressure on the upstream side of the valve increases, which leads to an increase in the fuel injection amount Q calculated by the ECU 16, resulting in a decrease in the excess air ratio $\lambda$.

Thus, in the intake system abnormality detecting device of this example, attention is paid to the fact that when the intake resistance increases due to some abnormality in the intake passage 3, the actual intake air amount GF which is the intake air amount detected by the air flow meter 17 decreases while the fuel injection amount Q increases, and the mixture ratio obtained from the actual intake air amount GF and the fuel injection amount Q is compared with a reference value to thereby detect any abnormality in the intake system.

As described above, the fuel injection amount Q is a value related to the intake air amount and the ECU 26 constituting the injection amount calculating circuit works as a detecting unit for detecting a value related to the intake air amount of the intake system of the engine.

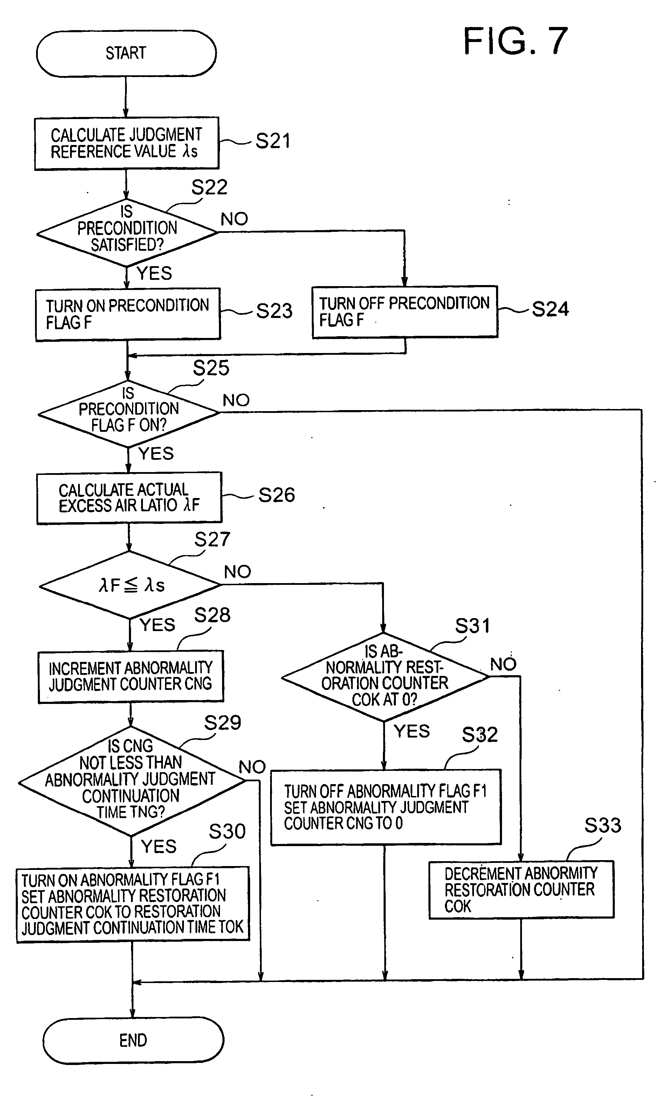

In the following, the operation of the engine intake system abnormality detecting device of this example will be described with reference to the flowchart shown in Fig. 7.

The intake system abnormality detection routine shown in this flowchart is executed for each period by the ECU 26.

In step S21, a judgment reference value $\lambda$S is calculated as a reference value. The judgment reference value $\lambda$S is a one-dimensional map using the engine speed as a parameter; it can be set to a different value according to the engine speed.

Next, in step S22, the ECU 26 makes a judgment as to whether the precondition for the intake system abnormality detection is satisfied or not. For example, it checks to see whether the air flow meter 17, the engine rotation sensor 24, etc. are operating properly or not. That is, the ECU 26 makes a judgment as to whether the precondition for proper abnormality detection is satisfied or not. When the precondition is satisfied, the procedure advances to step S23, where the precondition flag F is turned on, and the procedure advances to step S25. When the precondition is not satisfied, the precondition flag F is turned off in step S24, and the procedure advances to step S25.

Next, in step S25, a judgment is made as to whether the precondition flag F is on or not. When the precondition flag F is on, the procedure advances to step S26. When the precondition flag F is not on, the series of processes are completed.

In step S26, the actual excess air ratio $\lambda F$, which is the ratio of the actual intake air amount GF to the theoretical air amount g0, is calculated on the basis of the actual intake air amount GF detected by the air flow meter 17 by the following formula:

$$\lambda F = GF/g0 = GF/(Q \times \rho \times c)$$

In step S27, a judgment is made as to whether the actual excess air ratio $\lambda F$ is not more than the judgment reference value $\lambda S$ (e.g., $\lambda S = 1$). When the actual excess air ratio $\lambda F$ is not more than the judgment reference value $\lambda S$, it is determined in step S28 that there is some abnormality in the intake system, and the abnormality judgment counter CNG initially set to zero is incremented, the procedure advancing to step S29. When the actual excess air ratio $\lambda F$ is larger than the judgment reference value $\lambda S$, the procedure advances to step S31.

In step S29, a judgment is made as to whether the abnormality judgment counter CNG indicates a value not less than a predetermined abnormality judgment continuation time TNG. That is, a judgment is made as to whether the state in which the actual excess air ratio $\lambda F$ is not more than the judgment reference value $\lambda S$ has continued for the abnormality judgment continuation time TNG.

When the abnormality judgment counter CNG indicates a value not less than the abnormality judgment continuation time TNG, it is determined in step S30 that there is some abnormality and the abnormality flag F1 is turned on. Further, an abnormality restoration counter COK is set to a predetermined restoration judgment continuation time TOK value. The abnormality restoration counter COK is a subtraction counter. If the abnormality judgment in step S27 shows that the actual excess air ratio $\lambda F$ is larger than the judgment reference value $\lambda S$, the abnormality flag F1 is not turned off immediately. It turns off the abnormality flag F1 only when the abnormality judgment condition of step S27 is not satisfied continuously for the restoration judgment continuation time TOK.

When the abnormality judgment counter CNG does not indicate a value not less than the abnormality judgment continuation time TNG, step S30 is skipped, and the series of processes are completed.

When it is determined in step S27 that the actual excess air ratio $\lambda F$ is larger than the judgment reference value $\lambda S$, the abnormality restoration processes of steps S31 through S33 are executed.

First, in step S31, a judgment is made as to whether the value of the abnormality restoration counter COK has attained zero or not. That is, a judgment is made as to whether the abnormality judgment condition of step S27 has ceased to be continuously satisfied for the restoration judgment continuation time TOK. When the value of the abnormality restoration counter COK is zero, it is determined in step S32 that the abnormality has been eliminated, and the abnormality flag F1 is turned off and the abnormality judgment counter CNG is cleared to zero to complete the series of processes. Due to this arrangement, if the abnormality judgment condition of step S27 is not satisfied again over the abnormality judgment continuation time TNG, the abnormality flag F1 is not turned on.

When the value of the abnormality restoration counter COK is not zero, in step S33, the abnormality restoration counter COK is decremented to complete the series of processes.

When the abnormality flag F1 is turned on, a routine different from the one described above is executed, whereby a fail-safe processing regarding abnormality in the intake system of the diesel engine is performed. In the fail-safe processing, the swirl valve control and the EGR control are suspended. Further, in order that the engine may not be operated in the high rpm of high load range, accelerator control is performed, fictitiously restricting the fuel injection amount according to data on the accelerator opening sensor, or directly restricting the amount of fuel injected into the combustion chamber.

In this way, when there is some abnormality in the intake system and the intake resistance changes, the actual intake air amount GF detected by the air flow meter 17 provided in the intake passage 3 and the fuel injection amount Q change to cause fluctuation in the actual excess air ratio $\lambda F$. Thus, by comparing the actual excess air ratio $\lambda F$ with the judgment reference value $\lambda S$, it is possible to detect abnormality in the intake system. In this case, it is possible to perform abnormality detection with higher accuracy as compared to the case in which abnormality detection is performed simply based on changes in the actual intake air amount GF.

Example 6

In Example 5, a judgment is made in step S22 of the flowchart of Fig. 7 as to whether the precondition for intake system abnormality detection is satisfied or not. It is also possible to connect the swirl control valve 13 to the ECU 26, and to add the precondition may also require that the swirl control valve 13 be off.

In the case in which the swirl control valve 13 is normal, when the swirl control valve 13 is turned on to be totally opened, the tangential port 4a is closed, and air is supplied to the combustion chamber solely through the helical port 4b, so that the intake resistance in the intake manifold 4 increases, and the actual intake air amount GF is small. When the swirl control valve 13 is off, the swirl control valve 13 is opened, and air is supplied to the combustion chamber through both the tangential port 4a and the helical port 4b, so that the intake resistance of the intake passage 3 does not increase, and the actual intake air amount GF does not decrease. However, if the swirl control valve 13 persists in the totally closed state while the swirl control valve 13 is off, air is supplied to the combustion chamber solely through the helical port 4b, with the tangential port 4a being closed, so that the intake resistance in the intake manifold 4 increases, and the actual intake air amount GF decreases.

Thus, the actual excess air ratio $\lambda F$ calculated in step S26 is not more than the judgment reference value $\lambda S$ in step S27, and, if, after the series of processes, the abnormality flag F1 is turned on in step S30, the abnormality in the intake system can be regarded as attributable to persistent closure of the swirl control valve 13.

Example 7

While in Example 5, a one-dimensional map using the engine speed as a parameter constitutes the judgment reference value $\lambda S$ in step S21 of the flowchart of Fig. 7, it is also possible for the ECU 26 to calculate the judgment reference value $\lambda S$ by a two-dimensional map using the engine speed and the fuel injection amount as parameters. This makes it possible to vary the reference value for each combination of engine speed and fuel injection amount, so that, if combustion is performed under different conditions in the various engine operation ranges, it is possible to perform intake system abnormality judgment with high accuracy.

The above-described intake system abnormality detecting device for diesel engines of Examples 5 through 7 are widely applicable to intake system abnormality detection, making it also possible to detect clogging of the inter-cooler 9 and clogging of the air cleaner 7. Further, it is also possible to perform engine intake system abnormality detection on highlands with the same intake system abnormality detecting device, without having to perform any special processing regarding atmospheric pressure correction. The actual excess air ratio $\lambda F$ calculated from the value of the actual intake air amount GF changes with a deterioration with time of the air flow meter 17. This can be coped with by comparing the actual excess air ratio $\lambda F$ with the judgment reference value $\lambda S$ for a long period of time, making it possible to detect abnormality in the air flow meter 17.

The present invention is applicable not only to an intake abnormality which system involves an increase in intake resistance, but also to an intake abnormality system which involves a decrease in intake resistance as in the case of persistent opening of the swirl control valve 13. Further, apart from the excess air ratio, it is also possible to use the air fuel ratio or the equivalence ratio as the mixture ratio.

As described in Examples 2 and 6, in accordance with the present invention, the mixture ratio of the fuel injection amount and the actual intake air amount is calculated from the fuel injection amount and the actual intake air amount detected by the air flow meter, and the mixture ratio is compared with a reference value, whereby an abnormality judgment circuit determines that there is some abnormality in the swirl control valve of the system, making it possible to detect abnormality in the swirl control valve at low cost, without having to use an expensive $O_2$ sensor.

**Claims**

1. An engine intake system abnormality detecting device for detecting abnormality in a swirl control valve (13) of an engine intake system, comprising:

   an air flow meter (17) for detecting an intake air amount (GF) of the intake system; and
   an abnormality judgment circuit (16; 26) which compares the intake air amount (GF) detected by the air flow meter (17) or a mixture ratio ($\lambda F$) of a fuel injection amount of the engine calculated by an injection amount calculating circuit (26) and the intake air amount (GF) detected by the air flow meter (17) with a reference value (GP; $\lambda S$) to thereby make a judgment as to whether there is an abnormality in the swirl control valve (13),

   **characterized in that**
   the abnormality judgment circuit (16; 26) makes the judgment when the swirl control valve (13) is off.

2. An engine intake system abnormality detecting device according to claim 1, wherein the abnormality judgment circuit (16) compares the intake air amount (GF) detected by the air flow meter (17) with the reference value (GP).

3. An engine intake system abnormality detecting device according to claim 2, wherein the reference value (GP) is a calculation intake air amount calculated on the basis of an intake air pressure (Pin) of the intake system detected by a pressure sensor (14).

4. An engine intake system abnormality detecting device according to claim 3, wherein the abnormality judgment circuit (16) corrects the calculation intake air amount (GP) on the basis of an intake air temperature (Tim) of the intake system detected by a temperature sensor (15).

5. An engine intake system abnormality detecting device according to claim 3 or 4, wherein the abnormality judgment circuit (16) determines that there is an abnormality in the swirl control valve (13) if a value obtained by subtracting the detected intake air amount (GF) from the calculation intake air amount (GP) is continuously larger than a predetermined value ($\alpha$) for a predetermined period of time.

6. An engine intake system abnormality detecting device according to claim 1, wherein the abnormality judgment circuit (26) compares the mixture ratio ($\lambda$F) with the reference value ($\lambda$S).

7. An engine intake system abnormality detecting device according to claim 6, wherein the mixture ratio ($\lambda$F) is an excess air ratio calculated on the basis of a theoretical air fuel ratio.

8. An engine intake system abnormality detecting device according to claim 6 or 7, wherein the abnormality judgment circuit (26) determines the reference value ($\lambda$S) in correspondence with the engine speed detected by an engine rotation sensor (24).

9. An engine intake system abnormality detecting device according to claim 8, wherein the reference value ($\lambda$S) is calculated by a one-dimensional map with the engine speed as a parameter.

10. An engine intake system abnormality detecting device according to claim 6 or 7, wherein the abnormality judgment circuit (26) determines the reference value ($\lambda$S) in correspondence with the engine speed detected by an engine rotation sensor (24) and the fuel injection amount calculated by the injection amount calculating circuit (26).

11. An engine intake system abnormality detecting device according to claim 10, wherein the reference value ($\lambda$S) is calculated by a two-dimensional map with the engine speed and the fuel injection amount as parameters.

**Patentansprüche**

1. Verbrennungsmotoreinlasssystemabnormalitätserfassungsvorrichtung für das Erfassen einer Abnormalität in einem Wirbelsteuerventil (13) eines Verbrennungsmotoreinlasssystems, mit:

einem Luftmengenmesser (17) für das Erfassen einer Einlassluftmenge (GF) des Einlasssystems; und
einem Abnormalitätsbeurteilungsschaltkreis (16; 26), der die Einlassluftmenge (GF), die durch den Luftmengenmesser (17) erfasst wird, oder ein Mischverhältnis ($\lambda$F) einer Kraftstoffeinspritzmenge des Verbrennungsmotors, das durch einen Einspritzmengenberechnungsschaltkreis (26) berechnet wird, und die Einlassluftmenge (GF), die durch den Luftmengenmesser (17) erfasst wird, mit einem Referenzwert (GP; $\lambda$S) vergleicht, um **dadurch** zu beurteilen, ob es eine Abnormalität in dem Wirbelsteuerventil (13) gibt,

**dadurch gekennzeichnet, dass**
der Abnormalitätsbeurteilungsschaltkreis (16; 26) beurteilt, wenn das Wirbelsteuerventil (13) aus ist.

2. Verbrennungsmotoreinlasssystemabnormalitätserfassungsvorrichtung gemäß Anspruch 1, wobei der Abnormalitätsbeurteilungsschaltkreis (16) die Einlassluftmenge (GF), die durch den Luftmengenmesser (17) erfasst wird, mit dem Referenzwert (GP) vergleicht.

3. Verbrennungsmotoreinlasssystemabnormalitätserfassungsvorrichtung gemäß Anspruch 2, wobei der Referenzwert (GP) eine Berechnungseinlassluftmenge ist, die auf der Basis eines Einlassluftdrucks (Pin) des Einlasssystems berechnet wird, der durch den Drucksensor (14) wird.

4. Verbrennungsmotoreinlasssystemabnormalitätserfassungsvorrichtung gemäß Anspruch 3, wobei der Abnormalitätsbeurteilungsschaltkreis (16) die Berechnungseinlassluftmenge (GP) auf der Basis einer Einlasslufttemperatur (Tim) des Einlasssystems korrigiert, die durch einen Temperatursensor (15) erfasst wird.

5. Verbrennungsmotoreinlasssystemabnormalitätserfassungsvorrichtung gemäß Anspruch 3 oder 4, wobei der Abnormalitätsbeurteilungsschaltkreis (16) bestimmt, dass es eine Abnormalität in dem Wirbelsteuerventil (13) gibt, wenn ein Wert, der durch das Abziehen der erfassten Einlassluftmenge (GF) von der Berechnungseinlassluftmenge (GP) erhalten wird, für eine vorbestimmte Zeitspanne andauernd größer ist als ein vorbestimmter Wert ($\alpha$).

6. Verbrennungsmotoreinlasssystemabnormalitätserfassungsvorrichtung gemäß Anspruch 1, wobei der Abnormalitätsbeurteilungsschaltkreis (26) das Mischverhältnis ($\lambda$F) mit dem Referenzwert ($\lambda$S) vergleicht.

7. Verbrennungsmotoreinlasssystemabnormalitätserfassungsvorrichtung gemäß Anspruch 6, wobei das Mischverhältnis ($\lambda$F) ein Übermaßluftverhältnis ist, das auf Basis eines theoretischen Luft-Kraftstoff-Verhältnisses berechnet wird.

**8.** Verbrennungsmotoreinlasssystemabnormalitätserfassungsvorrichtung gemäß Anspruch 6 oder 7, wobei der Abnormalitätsbeurteilungsschaltkreis (26) den Referenzwert (λS) in Übereinstimmung mit der Verbrennungsmotorgeschwindigkeit bestimmt, die durch einen Verbrennungsmotorrotationssensor (24) erfasst wird.

**9.** Verbrennungsmotoreinlasssystemabnormalitätserfassungsvorrichtung gemäß Anspruch 8, wobei der Referenzwert (λS) durch ein eindimensionales Kennfeld mit der Verbrennungsmotorgeschwindigkeit als ein Parameter berechnet wird.

**10.** Verbrennungsmotoreinlasssystemabnormalitätserfassungsvorrichtung gemäß Anspruch 6 oder 7, wobei der Abnormalitätsbeurteilungsschaltkreis (26) den Referenzwert (λS) in Übereinstimmung mit der Verbrennungsmotorgeschwindigkeit, die durch einen Verbrennungsmotorrotationssensor (24) erfasst wird, und der Kraftstoffeinspritzmenge bestimmt, die durch den Einspritzmengenberechnungsschaltkreis (26) berechnet wird.

**11.** Verbrennungsmotoreinlasssystemabnormalitätserfassungsvorrichtung gemäß Anspruch 10, wobei der Referenzwert (λS) durch ein zweidimensionales Kennfeld mit der Verbrennungsmotorgeschwindigkeit und der Kraftstoffeinspritzmenge als Parameter berechnet wird.

**Revendications**

**1.** Dispositif de détection d'anomalies dans un système d'admission d'un moteur permettant de détecter une anomalie dans une soupape de contrôle de la turbulence (13) d'un système d'admission de moteur, comprenant :

un débitmètre (17) permettant de détecter une quantité d'air d'admission (GF) du système d'admission ; et

un circuit de jugement d'anomalies (16 ; 26) qui compare la quantité d'air d'admission (GF) détectée par le débitmètre d'air (17) ou un rapport de mélange (λF) d'une quantité d'injection de carburant du moteur calculée grâce à un circuit de calcul de la quantité d'injection (26) et la quantité d'air d'admission détectée par le débitmètre d'air (17) avec une valeur de référence (GP ; λS) afin d'effectuer ainsi un jugement pour savoir s'il existe une anomalie dans la soupape de contrôle de la turbulence (13),

**caractérisée en ce que** le circuit de jugement de l'anomalie (16 ; 26) effectue le jugement lorsque la soupape de contrôle de la turbulence (13) est arrêtée.

**2.** Dispositif de détection de l'anomalie d'un système d'admission de moteur selon la revendication 1, dans lequel le circuit de jugement de l'anomalie (16) compare la quantité d'air d'admission (GF) détectée par le débitmètre d'air (17) avec la valeur de référence (GP).

**3.** Dispositif de détection d'anomalies dans un système d'admission de moteur selon la revendication 2, dans lequel la valeur de référence (GP) est une quantité d'air d'admission de calcul calculée en se fondant sur une pression d'air d'admission (Pin) du système d'admission détectée par un capteur de pression (14).

**4.** Dispositif de détection d'anomalies d'un système d'admission de moteur selon la revendication 3, dans lequel le circuit de jugement d'anomalie (16) corrige la quantité d'air d'admission de calcul (GP) en se fondant sur une température d'air d'admission (Tim) du système d'admission détectée par un capteur de température (15).

**5.** Dispositif de détection de l'anomalie d'un système d'admission de moteur selon la revendication 3 ou 4, dans lequel le circuit de jugement d'anomalie (16) détermine qu'il existe une anomalie dans la soupape de contrôle de la turbulence (13) si une valeur obtenue en soustrayant la quantité d'air d'admission détectée (GF) de la quantité d'air d'admission de calcul (GP) est plus grande en continu qu'une valeur prédéterminée (α) pendant un laps de temps prédéterminé.

**6.** Dispositif de détection d'anomalies du système d'admission de moteur selon la revendication 1, dans lequel le circuit de jugement d'anomalie (26) compare le rapport de mélange (λF) avec les valeurs de référence (λS).

**7.** Dispositif de détection d'anomalies de système d'admission de moteur selon la revendication 6, dans lequel le rapport de mélange (λF) est un rapport d'air en excès calculé en se fondant sur un rapport air-carburant théorique.

**8.** Dispositif de détection d'anomalies de système d'admission de moteur selon la revendication 6 ou 7, dans lequel le circuit de jugement d'anomalie (26) détermine la valeur de référence (λS) en correspondance avec le régime du moteur détecté par un capteur de rotation du moteur (24).

**9.** Dispositif de détection d'anomalies de système d'admission de moteur selon la revendication 8, dans lequel la valeur de référence ($\lambda$S) est calculée grâce à une mappe en une dimension ayant le régime de moteur comme paramètre.

10. Dispositif de détection d'anomalies de système d'admission de moteur selon la revendication 6 ou 7, dans lequel le circuit de jugement d'anomalie (26) détermine la valeur de référence ($\lambda$S) en correspondance avec le régime de moteur détecté par un capteur de rotation du moteur (24) et la quantité d'injection de carburant calculée par le circuit de calcul de la quantité d'injection (26).

11. Dispositif de détection d'anomalies de système d'admission de moteur selon la revendication 10, dans lequel la valeur de référence ($\lambda$S) est calculée grâce à une mappe à deux dimensions ayant le régime de moteur et la quantité d'injection de carburant comme paramètres.

# FIG. 1

# FIG. 2

INTAKE AIR AMOUNT OF DETE-
CTED BY AIR FLOW METER

B

A

INTAKE AIR PRESSURE Pin
OF INTAKE MANIFOLD

——— SWIRL CONTROL VALVE TOTALLY OPEN

- - - - - SWIRL CONTROL VALVE TOTALLY CLOSED

# FIG. 3

```
          ┌──────────────┐
          │    START     │
          └──────┬───────┘
                 │
                 ▼                    S1
         ╱─────────────────╲   NO
        ╱  IS PRECONDITION  ╲─────────────────────────────────┐
        ╲   SATISFIED?      ╱                                  │
         ╲─────────────────╱                                   │
                 │ YES                                          │
                 ▼                                              │
        ┌─────────────────────┐   S2                           │
        │ CALCULATE CALCULATI-│                                │
        │ ON INTAKE AIR AMOUNT│                                │
        │ GP                  │                                │
        └──────────┬──────────┘                                │
                   ▼                                           │
        ┌─────────────────────┐   S3            ┌──────────────┴──────────────────────────────────┐
        │ CORRECT GP BASED    │                 │                                        S10       │
        │ ON INTAKE AIR TEMP- │                 │                                                  │
        │ ERATURE             │                 │ TURN OFF TEMPORARY ABNORMALITY JUDGMENT          │
        └──────────┬──────────┘                 │ FLAG F1                                          │
                   ▼                            │ TURN OFF TEMPORARY ABNORMALITY CONTINUA-         │
        ┌─────────────────────┐   S4            │ TION JUDGMENT FLAG F2                            │
        │ DETECT ACTUAL INTAKE│                 │ SET CONTINUATION TIME COUNTER C1 TO 0            │
        │ AIR AMOUNT GF BY AIR│                 │ SET NUMBER-OF-TIMES COUNTER C2 TO 0              │
        │ FLOW METER          │                 └─────────────────────────────────────────────────┘
        └──────────┬──────────┘
                   ▼              S5
           ╱───────────────╲   NO
          ╱   GP − GF > α   ╲──────────────────────┐
          ╲                 ╱                       │
           ╲───────────────╱       S6              S7
                   │ YES                            │
                   ▼                                ▼
        ┌──────────────────────┐      ┌──────────────────────────┐
        │ TURN ON TEMPORARY    │      │ TURN OFF TEMPORARY ABNORMA-│
        │ ABNORMA-LITY JUDGMENT│      │ LITY JUDGMENT FLAG F1     │
        │ FLAG F1              │      │ SET CONTINUATION TIME     │
        │ INCREMENT CONTINUATION│      │ COUNTER C1 TO 0           │
        │ TIME COUNTER C1      │      └───────────┬──────────────┘
        └──────────┬───────────┘                  │
                   ├──────────────────────────────┘
                   ▼              S8
           ╱──────────────────╲   NO
          ╱   HAS C1 ATTAINED   ╲───────────────────────────┐
          ╲ PREDETERMINED       ╱                           │
          ╲ CONTINUATION TIME? ╱                            │
           ╲──────────────────╱                             │
                   │ YES          S9                        │
                   ▼                                        │
        ┌─────────────────────────────────────┐            │
        │ TURN ON TEMPORARY ABNORMITY         │            │
        │ CONTINUATION JUDGMENT FLAG F2       │            │
        │ INCREMENT NUMBER-OF-TIMES COUNTER C2│            │
        │ TURN OFF TEMPORARY ABNORMALITY      │            │
        │ JUDGMENT FLAG F1                    │            │
        │ SET CONTINUATION TIME COUNTER C1 TO 0│            │
        └──────────────────┬──────────────────┘            │
                           ├───────────────────────────────┘
                           ▼           S11
                   ╱──────────────────╲   NO
                  ╱   HAS C2 ATTAINED   ╲─────────────────┐
                  ╲ PREDETERMINED       ╱                 │
                  ╲ NUMBER OF TIMES?   ╱                  │
                   ╲──────────────────╱                   │
                           │ YES                          │
                           ▼                              │
                  ┌─────────────────────┐   S12           │
                  │ TURN ON REAL ABNOR- │                 │
                  │ MALITY FLAG F3      │                 │
                  └──────────┬──────────┘                 │
                             ├──────────────────────────────┘
                             ▼
                      ┌──────────────┐
                      │     END      │
                      └──────────────┘
```

14

# FIG. 4

START

↓ S1

IS PRECONDITION SATISFIED? —— NO

↓ YES  S1a

IS SWIRL CONTROL VALVE OFF? —— NO

↓ YES

CALCULATE CALCULATION INTAKE AIR AMOUNT GP  — S2

↓

CORRECT GP BASED ON INTAKE AIR TEMPERATURE  — S3

↓

DETECT ACTUAL INTAKE AIR AMOUNT GF BY AIR FLOW METER  — S4

↓  S5

$GP - GF > \alpha$ —— NO

↓ YES  S6

TURN ON TEMPORARY ABNORMALITY JUDGMENT FLAG F1
INCREMENT CONTINUATION TIME COUNTER C1

S7
TURN OFF TEMPORARY ABNORMALITY JUDGMENT FLAG F1
SET CONTINUATION TIME COUNTER C1 TO 0

S10
TURN OFF TEMPORARY ABNORMALITY JUDGMENT FLAG F1
TURN OFF TEMPORARY ABNORMALITY CONTINUATION JUDGMENT FLAG F2
SET CONTINUATION TIME COUNTER C1 TO 0
SET NUMBER-OF-TIMES COUNTER C2 TO 0

↓  S8

HAS C1 ATTAINED PREDETERMINED CONTINUATION TIME? —— NO

↓ YES  S9

TURN ON TEMPORARY ABNORMALITY CONTINUATION JUDGMENT FLAG F2
INCREMENT NUMBER-OF-TIMES COUNTER C2
TURN OFF TEMPORARY ABNORMALITY JUDGMENT FLAG F1
SET CONTINUATION TIME COUNTER C1 TO 0

↓  S11

HAS C2 ATTAINED PREDETERMINED NUMBER OF TIMES? —— NO

↓ YES  S12a

TURN ON REAL ABNORMALITY FLAG F3
DETERMINE THAT THERE IS ABNORMALITY IN SWIRL CONTROL

↓

END

15

# FIG. 5

```
                START

          S1
          IS                          NO
     PRECONDITION  ─────────────────────────┐
       SATISFIED?                            │
          │ YES                              │
  ┌─────────────────┐                        │
  │ CALCULATE CALCULATI-│  S2                │
  │ ON INTAKE AIR AMOUNT│                    │                    S10
  │ GP                  │      ┌──────────────────────────────────────────────┐
  └─────────────────┘          │ TURN OFF TEMPORARY ABNORMALITY JUDGMENT      │
          │                     │ FLAG F1                                      │
  ┌─────────────────┐          │ TURN OFF TEMPORARY ABNORMALITY CONTINUA-     │
  │ DETECT ACTUAL INTAKE │ S4   │ TION JUDGMENT FLAG F2                        │
  │ AIR AMOUNT GF BY AIR │      │ SET CONTINUATION TIME COUNTER C1 TO 0        │
  │ FLOW METER          │       │ SET NUMBER-OF-TIMES COUNTER C2 TO 0          │
  └─────────────────┘          └──────────────────────────────────────────────┘
          │           S5
       GP − GF > α          NO
          │ YES
```

S1 — IS PRECONDITION SATISFIED? — NO

S2 — CALCULATE CALCULATION INTAKE AIR AMOUNT GP

S4 — DETECT ACTUAL INTAKE AIR AMOUNT GF BY AIR FLOW METER

S5 — $GP - GF > \alpha$ — NO

S10 — TURN OFF TEMPORARY ABNORMALITY JUDGMENT FLAG F1 / TURN OFF TEMPORARY ABNORMALITY CONTINUATION JUDGMENT FLAG F2 / SET CONTINUATION TIME COUNTER C1 TO 0 / SET NUMBER-OF-TIMES COUNTER C2 TO 0

S6 — TURN ON TEMPORARY ABNORMALITY JUDGMENT FLAG F1 / INCREMENT CONTINUATION TIME COUNTER C1

S7 — TURN OFF TEMPORARY ABNORMALITY JUDGMENT FLAG F1 / SET CONTINUATION TIME COUNTER C1 TO 0

S8 — HAS C1 ATTAINED PREDETERMINED CONTINUATION TIME? — NO

S9 — TURN ON TEMPORARY ABNORMARITY CONTINUATION JUDGMENT FLAG F2 / INCREMENT NUMBER-OF-TIMES COUNTER C2 / TURN OFF TEMPORARY ABNORMALITY JUDGMENT FLAG F1 / SET CONTINUATION TIME COUNTER C1 TO 0

S11 — HAS C2 ATTAINED PREDETERMINED NUMBER OF TIMES? — NO

S12 — TURN ON REAL ABNORMALITY FLAG F3

END

# FIG. 6

FIG. 7

START

CALCULATE JUDGMENT
REFERENCE VALUE λs — S21

S22

IS
PRECONDITION
SATISFIED?

NO →

YES

TURN ON PRECONDITION
FLAG F — S23

TURN OFF PRECONDITION
FLAG F — S24

S25

IS
PRECONDITION
FLAG F ON?

NO →

YES

CALCULATE ACTUAL
EXCESS AIR LATIO λF — S26

S27

$\lambda F \leqq \lambda s$

NO →

YES   S28

INCREMENT ABNORMALITY
JUDGMENT COUNTER CNG

S31

IS AB-
NORMALITY REST-
ORATION COUNTER
COK AT 0?

NO →

YES   S32

S29

IS CNG
NOT LESS THAN
ABNORMALITY JUDGMENT
CONTINUATION
TIME TNG?

NO →

YES   S30

TURN OFF ABNORMALITY FLAG F1
SET ABNORMALITY JUDGMENT
COUNTER CNG TO 0

S33

TURN ON ABNORMALITY FLAG F1
SET ABNORMALITY RESTORATION
COUNTER COK TO RESTORATION
JUDGMENT CONTINUATION TIME TOK

DECREMENT ABNORMILTY
RESTORATION COUNTER
COK

END

18